# EUROPEAN PATENT SPECIFICATION

(11) **EP 2 602 645 B1**
(45) Date of publication and mention of the grant of the patent: **26.03.2014**
(21) Application number: 12163568.4
(22) Date of filing: 10.04.2012
(51) Int. Cl.: G02B 5/00

(54) **Beam dump for particle counter or fluorescence detector**
Strahlabsorber für Teilchenzähler oder Fluoreszenzdetektor
Décharge de faisceau pour compteur de particules ou détecteur de fluorescence

(30) Priority: 09.12.2011 KR 20110132029
(43) Date of publication of application: 12.06.2013
(73) Proprietor: Agency For Defense Development, Daejeon 305-152 (KR)
(72) Inventor: Choi, Ki-bong, 301-140 Daejeon (KR); Ha, Yeon-cheol, 302-280 Daejeon (KR); Kim, Deokho, 430-040 Gyeonggi-do (KR)
(74) Representative: Ilgart, Jean-Christophe

(56) References cited:
- JP-A- 2008 185 525
- JP-A- 2010 236 920
- US-A1- 2005 109 737
- US-A1- 2008 089 382
- US-A1- 2009 080 084
- US-A1- 2011 267 550

## Description

### Technical Field

The present invention relates to a beam dump for a particle counter adapted to detect the intensity of a weak light signal generated when a high power beam (for example, a beam of light or a laser beam irradiated from a high power light source) is irradiated to fine particles, and the intensity of the high power beam; or a fluorescence detector.

### Background Art

A beam dump is a device that absorbs a beam of light, and major design concerns in the beam dump typically include the reduction of reflections and scattering of the beam of light as well as the dissipation of heat generated by absorption of the beam of light.

Generally, dumping the beam with a simple flat surface may scatter unacceptably large amounts of light for some applications, even though the direct reflection may be effectively reduced.

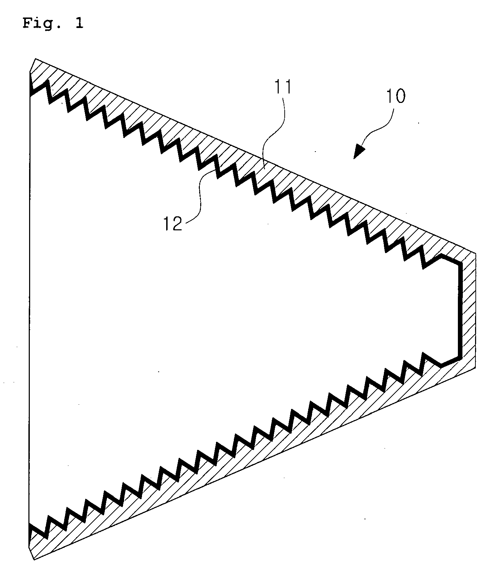

For use in a particle counter or a fluorescence detector using a laser beam, a beam dump 10, as shown in FIG.1, is provided in which a cone 11 made of aluminum has a black interior 12 attached or coated around the inner peripheral surface thereof. In this case, however, the black interior 12 does not completely block the reflection of the light, thereby undesirably generating reflected light and stray light.

Of course, the generation of the reflected light and stray light causes the intensity of the weak light signal to be erroneously measured.

A particle counter or a fluorescence detector is a device that detects the intensity of the weak light signal generated when the high power beam is irradiated to fine particles or fluorescent materials and the intensity of the high power beam, and therefore, the performance of the device is dependent upon the removal of reflected light and stray light.

### Disclosure

### Technical Problem

Accordingly, the present invention has been made in view of the above-mentioned problems occurring in the prior art, and it is an object of the present invention to provide a beam dump for a particle counter adapted to detect the intensity of a beam irradiated from a high power light source and the intensity of a weak light signal generated when fine particles are passed through the beam; or a fluorescence detector.

It is another object of the present invention to provide a beam dump for a particle counter or a fluorescence detector that is capable of preventing the reflected light from the surface of a light source output detector mounted on the rear end thereof and the stray light generated by the reflection and scattering at the inside thereof from being incident on an optical chamber of the particle counter or the fluorescence detector, which further keeps the reflected light and the stray light from being introduced into another detector (for example, a scattering light detector or a fluorescent light detector) mounted on the optical chamber, thereby improving the signal-to-noise ratio (the energy ratio between signal and noise) of another detector mounted on the optical chamber and enhancing a degree of accuracy of the measurement.

### Technical Solution

To accomplish the above objects, according to the present invention, there is provided a beam dump for a particle counter or a fluorescence detector that is mounted on one side of an optical chamber in such a manner as to be opposite to a beam-forming part mounted on the other side of the optical chamber, so as to dump the beam irradiated from the beam-forming part, the beam dump including: a body adapted to be fixed to the optical chamber; a focal lens assembly adapted to be fitted to an insertion hole penetrating into the center of the body; a pin hole assembly adapted to be inserted into a concave portion formed on the rear surface of the body in such a manner as to pass a light axis of the focal lens assembly through a pin hole; a housing adapted to be fixed to the rear surface of the pin hole assembly; and a light source output detector adapted to be fixed to the rear surface of the housing in such a manner as to be inclined to a given angle with respect to a reference plane perpendicular to the light axis of the focal lens assembly, wherein the pin hole assembly and the housing have a cavity formed in the center portions thereof, such that as the beam passed through the pin hole of the pin hole assembly becomes gradually near the light source output detector, the width of the beam becomes spread.

According to the present invention, preferably, the pin hole assembly includes a cap having the pin hole penetrating into the center of the front surface thereof, a plurality of blocks adapted to be fitted between the outer periphery of the cap and the inner periphery of the concave portion formed on the rear surface of the body, and an end member adapted to be brought into contact with the rear surface of the cap, and the body includes a plurality of equally spaced position adjusting members coupled penetratingly to the outer periphery thereof so as to adjust the position of the cap within the concave portion formed on the rear surface thereof.

According to the present invention, preferably, the pin hole on the cap of the pin hole assembly penetrates in such a manner as to be increased gradually in diameter along the advancing passage of the incident beam therethrough, a hole on the end member of the pin hole assembly penetrates in such a manner as to be increased gradually in diameter along the advancing passage of the incident beam through the pin hole, and a hole on the housing penetrates in such a manner as to be decreased gradually in diameter along the advancing passage of the incident beam through the pin hole.

### Advantageous Effect

According to the present invention, the reflected light from the surface of the light source output detector and the stray light generated at the inside of the beam dump disappear inside the cavity of the beam dump, thereby preventing them from being incident on the optical chamber of the particle counter or the fluorescence detector.

Therefore, the intensity of the beam (for example, a laser beam) irradiated from the high power light source is accurately measured through the light source output detector, and the intensity of the weak light signal generated when fine particles or fluorescent materials are passed through the beam can be accurately measured through another detector mounted on the optical chamber.

### Description of Drawings

FIG.1 is a schematic view showing a beam dump in a conical shape in a conventional practice.
FIG.2a is a perspective view showing a particle counter to which a beam dump according to the present invention is coupled.
FIG.2b is a perspective view showing the particle counter from which the beam dump according to the present invention is separated.
FIG.3 is an exploded view showing the beam dump according to the present invention.
FIG.4 is a perspective view showing the outer appearance of the beam dump in the assembling state.
FIG.5a is a sectional view showing a state where the beam dump is mounted on the rear side of an optical chamber.
FIG.5b is a sectional view taken along the line A-A of FIG.5a.
FIG.6 is a schematic view showing an operating principle of the beam dump according to the present invention.

### Mode for Invention

Hereinafter, an explanation on a beam dump for a particle counter or a fluorescence detector according to the present invention will be in detail given with reference to the attached drawings. Of course, the beam dump of the present invention is applicable to the fluorescence detector, and in this case, since the fluorescence detector and the particle counter are just divided in accordance with the existence of a fluorescence signal-measuring part, a detailed explanation on the fluorescence detector will be avoided for the brevity of the description.

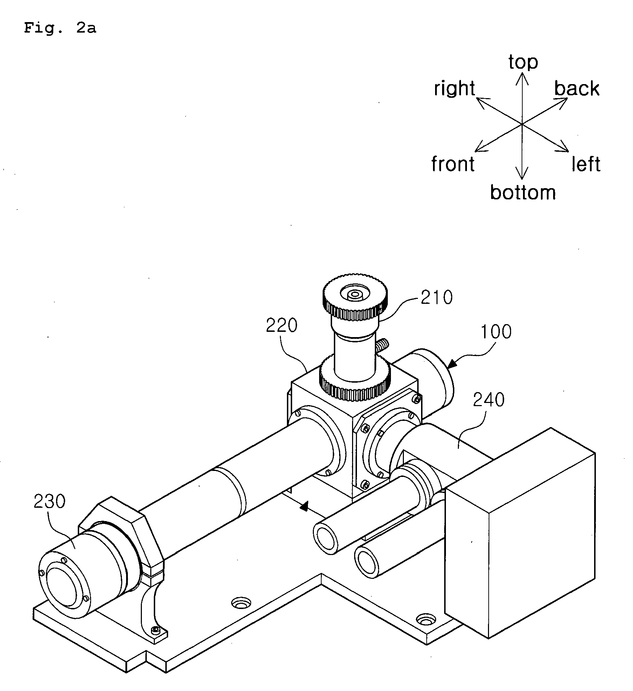

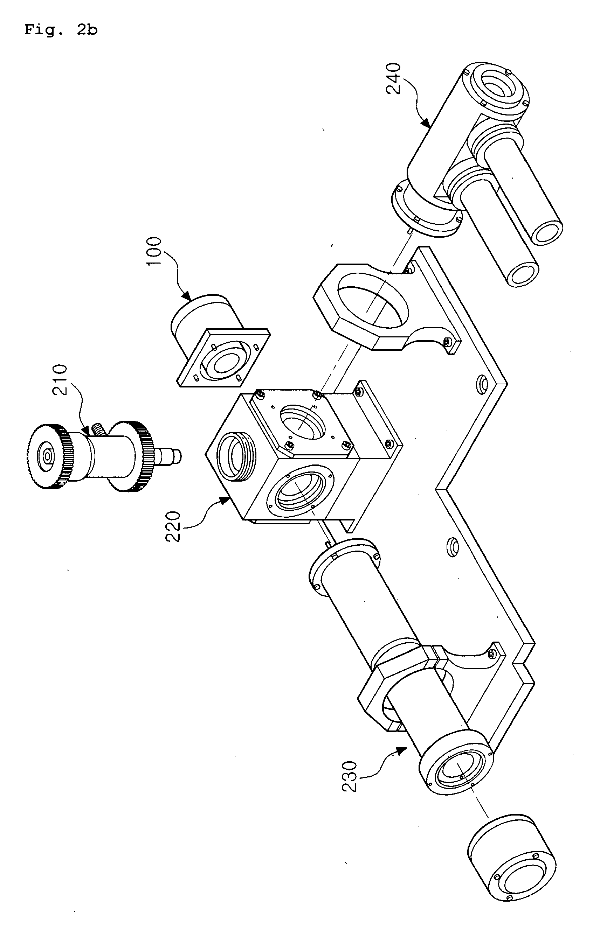

Referring first to FIGS.2a and 2b, a configuration of a particle counter on which a beam dump according to the present invention is mounted will be discussed.

As shown in FIGS.2a and 2b, the particle counter on which the beam dump 100 according to the present invention is mounted includes an optical chamber 220, a particle-introducing part 210 and a particle-ejecting part (not shown) disposed on the upper and lower sides of the optical chamber 220, a beam-forming part 230 and the beam dump 100 disposed on the front and rear sides of the optical chamber 220, and a light-measuring part 240 disposed on any one (the left side in the drawings) of left and right sides of the optical chamber 220.

According to the particle counter under the above-mentioned configuration, fine particles in the air are introduced into the optical chamber 220 through the particle-introducing part 210, together with a given airflow, and at this time, the fine particles are passed through a laser beam irradiated from the beam-forming part 230 to the beam dump 100, thereby generating scattering light in the optical chamber 220. Next, the scattering light is detected through the light-measuring part 240, thereby measuring the concentration of the fine particles in the air. If the fine particles are bioparticles, fluorescent light occurs together with the scattering light. When the fluorescent light is detected, the concentration of the bioparticles in the air can be measured.

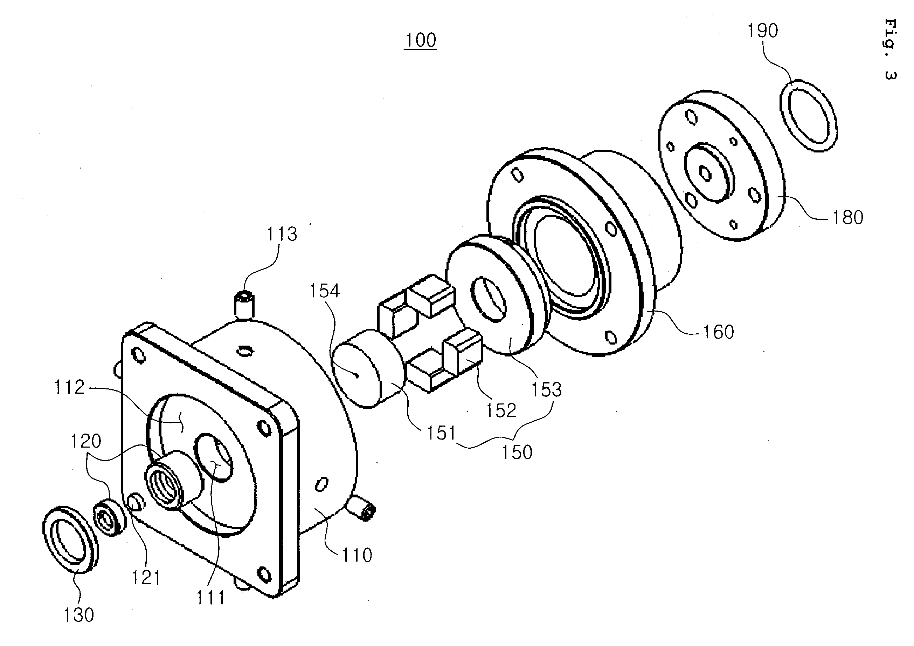

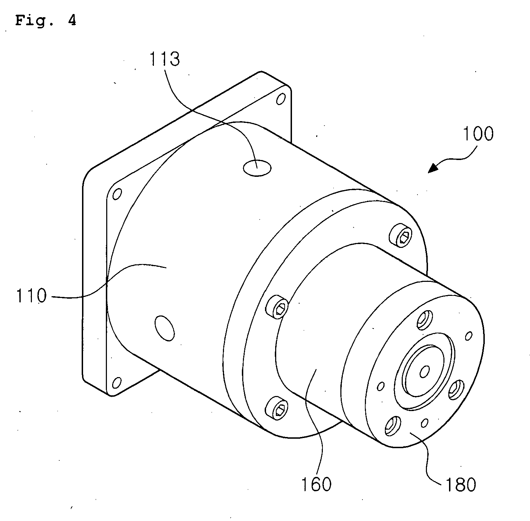

Further, as shown in FIGS.3 to 6, the beam dump 100 according to the present invention includes: a body 110 adapted to be fixed to the rear surface of the optical chamber 220 by means of screws; a focal lens assembly 120 adapted to be fitted to an insertion hole 111 penetrating into the center portion of the body 110; a mounting groove 112 formed concavedly on the front surface of the body 110 in such a manner as to position the insertion hole 111 on the center thereof; a window 140 adapted to be insertedly fixed to the mounting groove 112; a fixing ring 130 adapted to be fitted to the outer periphery of the focal lens assembly 120 in such a manner as to be covered with the window 140; a pin hole assembly 150 adapted to be fitted to a concave portion formed on the rear surface of the body 110 in such a manner as to be positioned on the center of the insertion hole 111; a housing 160 adapted to be fixed to the rear end of the body 110 by means of screws; a light source output detector 180 adapted to be fixed to the rear end of the housing 160 by means of screws; a sealing ring 190 adapted to be fitted to a ring groove formed on the center portion of the rear surface of the light source output detector 180; and a cover plate 170 adapted to be fixed to the rear surface of the light source output detector 180.

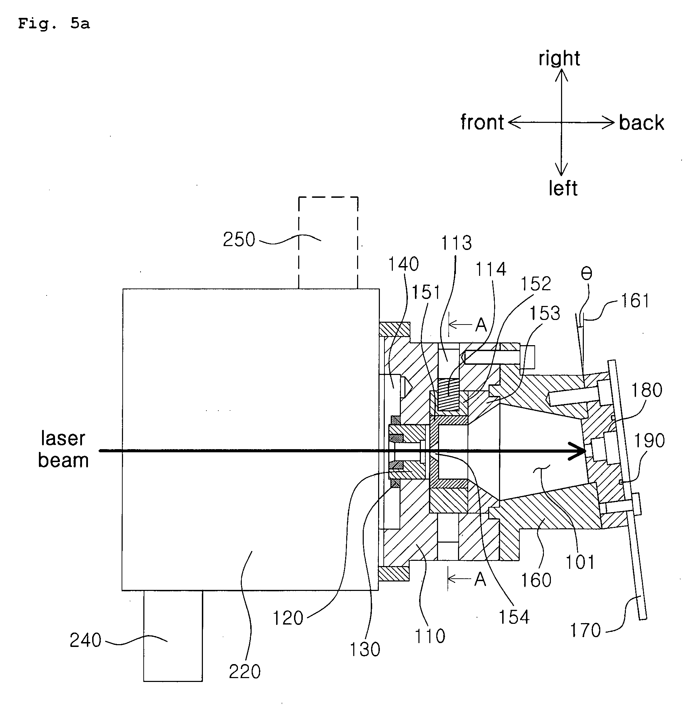

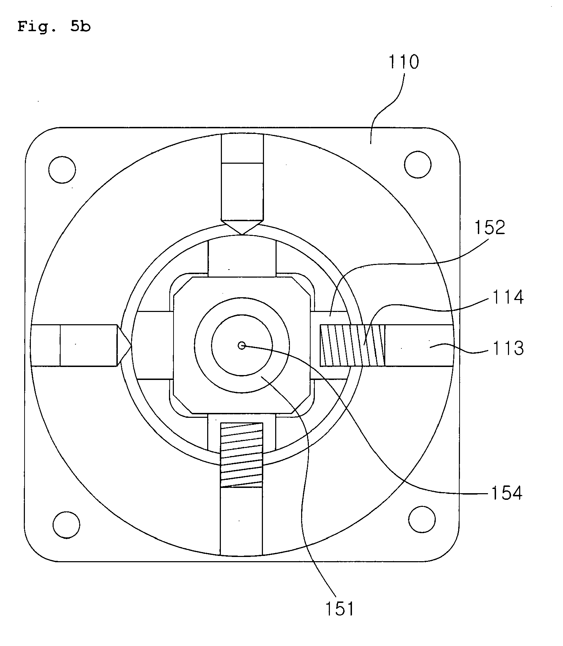

As shown in FIG.5a, the optical chamber 220 may have light-measuring parts 240 and 250 mounted on the left and right sides thereof so as to detect different light signals (for example, scattering light and fluorescent light).

The focal lens assembly 120 makes use of a convex lens 121 as a focal lens so as to permit a laser beam to be passed through a pin hole 154 (for example, having a diameter of 0.3mm) of the pin hole assembly 150.

The pin hole assembly 150 includes: a cylindrical cap 151 having the pin hole 154 penetrating into the center of the front surface thereof; a plurality of blocks 152 (for example, four blocks) adapted to be fitted between the outer periphery of the cap 151 and the inner periphery of the concave portion formed on the rear surface of the body 110; and an end member 153 adapted to be brought into contact with the rear surface of the cap 151.

The pin hole 154 penetrates in such a manner as to be decreased gradually in diameter toward the front surface of the cap 151.

The end member 153 has a hole penetrating into the center thereof in such a manner as to be larger in diameter on the rear surface thereof than on the front surface thereof, and in this case, the diameter of the hole on the front surface thereof is the same as the inner diameter of the concave portion formed on the rear surface of the cap 151.

Next, the body 110 has a plurality of equally spaced position adjusting members 113 (for example, four position adjusting members) coupled penetratingly to the outer periphery thereof. The position adjusting members 113 have respective springs 114 mounted to press the blocks 152 toward the outer periphery of the cap 151, and thus, as they are fastened or unfastened, the position of the cap 151 can be adjusted within the concave portion formed on the rear surface of the body 110.

Further, the housing 160 has a hole penetrating into the center thereof in such a manner as to be larger in diameter on the front surface thereof than on the rear surface thereof, and in this case, the diameter of the hole on the front surface of the housing 160 is the same as the diameter of the hole on the rear surface formed penetratingly into the center of the end member 153.

Moreover, the rear surface of the housing 160 is inclined by a given angle θ (for example, 10°) with respect to the reference plane perpendicular to a light axis.

The light source output detector 180 is adapted to detect the variations in the intensity of the laser beam if the beam-forming part 230 and the beam dump 100 are not aligned to each other on the front and rear sides of the optical chamber 220 or if the beam-forming part 230 has a malfunction, and then, to generate an alarming signal through an alarming device (not shown). A photodiode is used as the light source output detector 180.

Next, an explanation on the operating effect of the beam dump 100 according to the present invention will be given.

According to the present invention, first, the beam dump 100 is made to an integrated body in such a manner as to forcedly fit some of parts and to fix some of parts by means of screws, and therefore, it is easy to perform the assembling and disassembling of the parts and it is convenient to be mounted on the particle counter.

Further, the space opened between the front surface of the body 110 and the rear surface of the optical chamber 220 is closed by means of the window 140 and the fixing ring 130, such that the internal pressure of the optical chamber 220 is maintained and the internal passage (or the internal space) of the beam dump 100 through which the laser beam is passed is shielded from the outside, thereby preventing outside air or light from being introduced into the optical chamber 220 or the beam dump 100. Therefore, the accuracy and reliability of the measurement can be improved.

According to the present invention, moreover, the beam dump 100 is configured wherein the laser beam (incident beam) irradiated from the beam-forming part 230 is passed through the openings formed on the front and rear surfaces of the optical chamber 220, the window 140, and the convex lens 121 of the focal lens assembly 120 and is then passed through the pin hole 154 having a diameter of 0.3mm penetrating into the front surface of the cap 151 of the pin hole assembly 150, thereby finally reaching the light source output detector 180. Furthermore, the surface of the light source output detector 180 is inclined by 10° with respect to the reference plane perpendicular to the advancing passage (light axis) of the incident light. Under the above configuration, even though a portion of the incident beam is reflected from the surface of the light source output detector 180 during the measurement of the intensity of the laser beam, the reflected beam has a different passage from the incident beam, such that an amount of reflected beam directly advancing toward the pin hole 154 can be remarkably reduced.

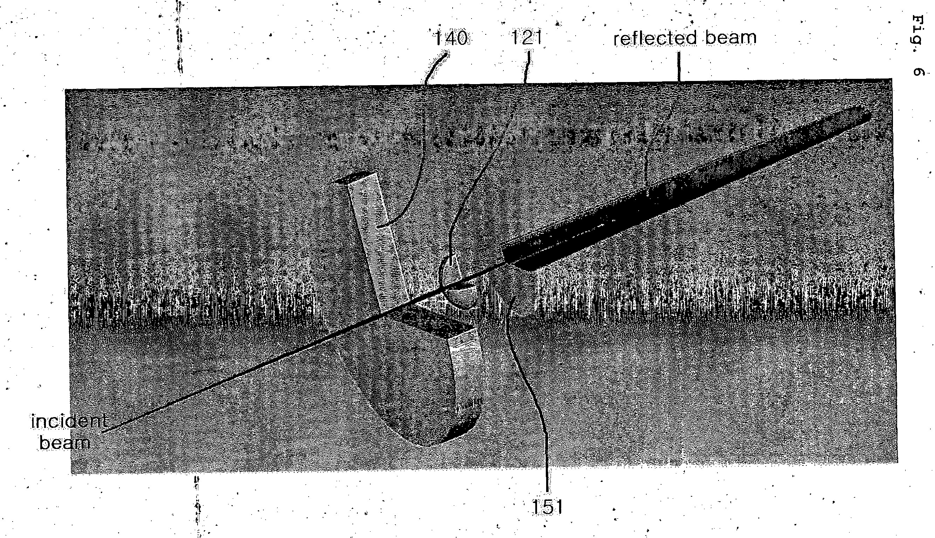

In more detail, as shown in FIG.6, the incident beam is collected to the pin hole 154 of the pin hole assembly 150 through the convex lens 121 of the focal lens assembly 120, and after passing through the pin hole 154, the incident beam becomes gradually near the light source output detector 180, while being passed through a cavity 101 formed inside the beam dump 100 from the rear side of the pin hole 154, thereby permitting the width of the beam to be spread.

Like this, if the incident beam spread in width reaches the light source output detector 180, the intensity of the incident beam is detected by means of the light source output detector 180, and a portion of the incident beam is reflected on the surface of the light source output detector 180.

As the reflected beam on the surface of the light source output detector 180 becomes gradually near the pin hole assembly 150, the width of the beam is more spread by 20 times than the diameter of the pin hole 154.

If it is assumed that a silicon photodiode is used as the light source output detector 180, when the incident beam is introduced perpendicularly (90°) into the surface of the photodiode, the reflection rate is just 30%, but it is introduced slantly by a given angle (90°-10°=80°) thereinto, the reflection rate is just 0.075%. When the Gaussian distribution of the beam is considered, the energy of the beam is just 0.2%.

According to the present invention, most of the beam reflected from the surface of the light source output detector 180 is not passed through the pin hole 154. Even though the reflected beam is passed through the pin hole 154, further, it is just passed through an area in which the outside intensity is low in the Gaussian distribution of the beam, such that only an extremely small amount of energy is introduced into the optical chamber 220.

As described above, according to the beam dump 100 of the present invention, the reflected light from the surface of the light source output detector 180 and the stray light generated inside the beam dump 100 are rarely introduced into the optical chamber 220, thereby improving the signal to noise ratio (the energy ratio between signal and noise) of another detector (for example, the light-measuring parts 240 and 250) mounted on the optical chamber 220 and enhancing the accuracy and reliability of the measurement of the particle counter or the fluorescence detector.

While the present invention has been described with reference to the particular illustrative embodiments, it is not to be restricted by the embodiments but only by the appended claims. It is to be appreciated that those skilled in the art can change or modify the embodiments without departing from the scope of the claims.

## Claims

1. A beam dump (100) for a particle counter or a fluorescence detector that is mounted on one side of an optical chamber (220) in such a manner as to be opposite to a beam-forming part (230) mounted on the other side of the optical chamber (220), so as to dump the beam irradiated from the beam-forming part (230), the beam dump (100) comprising:
a body (110) adapted to be fixed to the optical chamber (220);
a focal lens assembly (120) adapted to be fitted to an insertion hole (111) penetrating into the center of the body (110);
a pin hole assembly (150) adapted to be inserted into a concave portion formed on the rear surface of the body (110) in such a manner as to pass a light axis of the focal lens assembly (120) through a pin hole (154);
a housing adapted to be fixed to the rear surface of the pin hole assembly (150); and
a light source output detector (180) adapted to be fixed to the rear surface of the housing (160) in such a manner as to be inclined to a given angle (θ) with respect to a reference plane perpendicular to the light axis of the focal lens assembly (120),
wherein the pin hole assembly (150) and the housing (160) have a cavity formed in the center portions thereof, such that as the beam passed through the pin hole (154) of the pin hole assembly (150) becomes gradually near the light source output detector, the width of the beam becomes spread.

2. The beam dump according to claim 1, wherein the pin hole assembly (150) comprises a cap (151) having the pin hole (154) penetrating into the center of the front surface thereof, a plurality of blocks (152) adapted to be fitted between the outer periphery of the cap (151) and the inner periphery of the concave portion formed on the rear surface of the body, and an end member adapted to be brought into contact with the rear surface of the cap (151), and the body has a plurality of equally spaced position adjusting members coupled penetratingly to the outer periphery thereof so as to adjust the position of the cap within the concave portion formed on the rear surface thereof.

3. The beam dump according to claim 2, wherein the pin hole (154) on the cap of the pin hole assembly (150) penetrates in such a manner as to be increased gradually in diameter along the advancing passage of the incident beam therethrough, a hole on the end member of the pin hole assembly penetrates in such a manner as to be increased gradually in diameter along the advancing passage of the incident beam through the pin hole (154), and a hole on the housing penetrates in such a manner as to be decreased gradually in diameter along the advancing passage of the incident beam through the pin hole (154).

## Patentansprüche

1. Strahlfalle (100) für einen Partikelzähler oder einen Fluoreszenzdetektor, der an einer Seite einer optischen Kammer (220) derart montiert ist, dass er einem Strahlformungsteil (230) gegenüberliegt, das an der anderen Seite der optischen Kammer (220) montiert ist, um den Strahl einzufangen, der von dem Strahlformungsteil (230) ausgesandt wird, wobei die Strahlfalle (100) umfasst:
einen Körper (110), der dazu ausgelegt ist, an der optischen Kammer (220) befestigt zu sein;
eine Fokuslinsenanordnung (120), die dazu ausgelegt ist, an einem Einsetzloch (111) angebracht zu sein, das in die Mitte des Körpers (110) eindringt;
eine Pinhole-Anordnung (150), die dazu ausgelegt ist, in einen an der hinteren Oberfläche des Körpers (110) gebildeten konkaven Bereich derart eingesetzt zu sein, dass eine Lichtachse der Fokuslinsenanordnung (120) durch ein Pinhole (154) verläuft;
ein Gehäuse, das dazu ausgelegt ist, an der hinteren Oberfläche der Pinhole-Anordnung (150) befestigt zu sein; und
einen Lichtquellenausgabedetektor (180), der dazu ausgelegt ist, an der hinteren Oberfläche des Gehäuses (160) derart befestigt zu sein, dass er um einen bestimmten Winkel ( ) bezogen auf eine Referenzebene orthogonal zur Lichtachse der Fokuslinsenanordnung (120) geneigt ist,
wobei die Pinhole-Anordnung (150) und das Gehäuse (160) einen in den Mittelbereichen derselben gebildeten Hohlraum derart aufweisen, dass wenn der durch das Pinhole (154) der Pinhole-Anordnung (150) verlaufene Strahl sich schrittweise dem Lichtquellenausgabedetektor nähert, die Breite des Strahls weiter wird.

2. Strahlfalle nach Anspruch 1, wobei die Pinhole-Anordnung (150) einen Deckel (151) umfasst, wobei das Pinhole (154) in die Mitte der vorderen Oberfläche desselben eindringt, eine Mehrzahl von Blöcken (152), die dazu ausgelegt sind, zwischen dem Außenumfang des Deckels (151) und dem Innenumfang des an der hinteren Oberfläche des Körpers gebildeten konkaven Bereichs angebracht zu sein, sowie ein Endelement, das dazu ausgelegt ist, in Kontakt mit der hinteren Oberfläche des Deckels (151) gebracht zu sein, und wobei der Körper eine Mehrzahl von gleichmäßig beabstandeten Positionseinstellelementen aufweist, die eindringend am Außenumfang desselben gekoppelt sind, um die Position des Deckels innerhalb des konkaven Bereichs einzustellen, der an der hinteren Oberfläche desselben gebildet ist.

3. Strahlfalle nach Anspruch 2, wobei das Pinhole (154) am Deckel der Pinhole-Anordnung (150) derart eindringt, dass sein Durchmesser entlang des fortschreitenden Durchtritts des einfallenden Strahls schrittweise zunimmt, wobei ein Loch am Endelement der Pinhole-Anordnung derart eindringt, dass sein Durchmesser entlang des fortschreitenden Durchtritts des einfallenden Strahls durch das Pinhole (154) schrittweise zunimmt, und wobei ein Loch am Gehäuse derart eindringt, dass sein Durchmesser entlang des fortschreitenden Durchtritts des einfallenden Strahls durch das Pinhole (154) schrittweise abnimmt.

## Revendications

1. Absorbeur de faisceau (100) pour un compteur de particules ou un détecteur de fluorescence qui est monté d'un côté d'une chambre optique (220) afin d'être opposé à une partie de formation de faisceau (230) montée de l'autre côté de la chambre optique (220), afin d'absorber le faisceau rayonné depuis la partie de formation de faisceau (230), l'absorbeur de faisceau (100) comprenant :
un corps (110) adapté pour être fixé sur la chambre optique (220) ;
un ensemble de lentille focale (120) adapté pour être monté sur un trou d'insertion (111) pénétrant dans le centre du corps (110) ;
un ensemble de trou d'épingle (150) adapté pour être inséré dans une partie concave formée sur la surface arrière du corps (110) afin de faire passer un axe de lumière de l'ensemble de lentille focale (120) à travers le trou d'épingle (154) ;
un boîtier adapté pour être fixé sur la surface arrière de l'ensemble de trou d'épingle (150) ; et
un détecteur de sortie de source lumineuse (180) adapté pour être fixé sur la surface arrière du boîtier (160) afin d'être incliné à un angle donné (θ) par rapport à un plan de référence perpendiculaire à l'axe de lumière de l'ensemble de lentille focale (120),
dans lequel l'ensemble de trou d'épingle (150) et le boîtier (160) ont une cavité formée dans leurs parties centrales, de sorte qu'au fur et à mesure que le faisceau qui passe à travers le trou d'épingle (154) de l'ensemble de trou d'épingle (150) s'approche progressivement du détecteur de sortie de source lumineuse, la largeur du faisceau se déploie.

2. Absorbeur de faisceau selon la revendication 1, dans lequel l'ensemble de trou d'épingle (150) comprend un capuchon (151) ayant un trou d'épingle (154) pénétrant dans le centre de sa surface avant, une pluralité de blocs (152) adaptés pour être montés entre la périphérie externe du capuchon (151) et la périphérie interne de la partie concave formée sur la surface arrière du corps, et un élément d'extrémité adapté pour être amené en contact avec la surface arrière du capuchon (151), et le corps a une pluralité d'éléments d'ajustement de position espacés à égale distance couplés par pénétration à sa périphérie externe afin d'ajuster la position du capuchon à l'intérieur de la partie concave formée sur sa surface arrière.

3. Absorbeur de faisceau selon la revendication 2, dans lequel le trou d'épingle (154) sur le capuchon de l'ensemble de trou d'épingle (150) pénètre afin d'être augmenté progressivement du point de vue du diamètre le long du passage d'amenée du faisceau incident à travers ce dernier, un trou sur l'élément d'extrémité de l'ensemble de trou d'épingle pénètre afin d'être progressivement augmenté du point de vue du diamètre le long du passage d'amenée du faisceau incident à travers le trou d'épingle (154), et un trou sur le boîtier pénètre afin de diminuer progressivement du point de vue du diamètre le long du passage d'amenée du faisceau incident à travers le trou d'épingle (154).
